# EUROPEAN PATENT SPECIFICATION

(11) **EP 0 424 730 B1**
(45) Date of publication and mention of the grant of the patent: **24.07.1996**
(21) Application number: 90119405.0
(22) Date of filing: 10.10.1990
(51) Int. Cl.: G05B 19/4067, G05B 19/04

(54) **Industrial robot apparatus**
Anordnung für einen industriellen Roboter
Dispositif pour robot industriel

(30) Priority: 24.10.1989 JP 276412/89
(43) Date of publication of application: 02.05.1991
(73) Proprietor: MITSUBISHI DENKI KABUSHIKI KAISHA, Tokyo (JP)
(72) Inventor: Yagi, Nobuo, Mitsubishi Denki Kabushiki Kaisha, Inazawa-chi, Aichi (JP); Kurihara, Teruo, Mitsubishi Denki Kabushiki Kaisha, Inazawa-chi, Aichi (JP); Kato, Hisao, Mitsubishi Denki Kabushiki Kaisha, Inazawa-chi, Aichi (JP)
(74) Representative: Lehn, Werner, Dipl.-Ing.

(56) References cited:
- DE-A- 2 513 655
- DE-A- 3 630 904
- FR-A- 2 558 277
- GB-A- 2 124 941
- US-A- 4 418 398
- US-A- 4 631 464

## Description

### BACKGROUND OF THE INVENTION

### (Field of the Invention)

The present invention relates to countermeasures against an abnormal stop of an industrial robot apparatus for loading workpieces on a pallet.

### (Description of the Related Art)

An industrial robot apparatus with a fail safe means against an abnormal state such as an earthquake has been known as disclosed in Japanese Patent Laid Open Publication No. SHO 61-88301 (US 4 631 464) and so forth.

This industrial robot apparatus is structured so that an industrial robot is stopped when an abnormality occurs.

When the aforementioned conventional industrial robot apparatus for loading workpieces is abnormally stopped and then restarted, the program step in which the abnormality occurs does not always accord with the actual operation stop situation. Thus, when the industrial robot apparatus is restarted, the workpieces are excessively or insufficiently loaded.

### SUMMARY OF THE INVENTION

An object of the present invention is to solve such a problem and to provide an industrial robot apparatus where no loading failure takes place when it is restarted after an abnormal stop.

An industrial robot apparatus according to the present invention which is defined by claim 1 comprises a control unit for controlling an industrial robot and peripheral unit thereof by using a program so as to load workpieces on a pallet, abnormal stop means for detecting an abnormality which occurs in at least either of the industrial robot and the peripheral unit and for stopping both of the industrial robot and the peripheral unit, storage means for storing a step of the program which is being executed when the abnormal stop takes place, and removal means for removing remaining workpieces to be loaded on a pallet in steps following the stored step of the storage means.

In accordance with the present invention, since the industrial robot apparatus stores the program step in which the abnormal stop means operates and removes remaining workpieces which are being loaded to a pallet in the step following the stored step by the removal means. Thus, after the industrial robot apparatus is restored from the abnormality and it is restarted, it is possible to prevent the workpieces from being improperly loaded to the pallet and thereby improving the reliability of the operations.

### BRIEF DESCRIPTION OF THE DRAWINGS

Fig. 1 is a conceptual plan view of an industrial robot apparatus in accordance with the present invention;
Fig. 2 is a right side view of Fig. 1;
Fig. 3 is a conceptual electric diagram showing electric connections of Fig. 1;
Fig. 4 is an outlined flow chart describing the operations of Fig. 1; and
Fig. 5 is a schematic showing another embodiment of an industrial robot apparatus in accordance with the present invention, the schematic according with Fig. 1.

### SUMMARY OF THE INVENTION

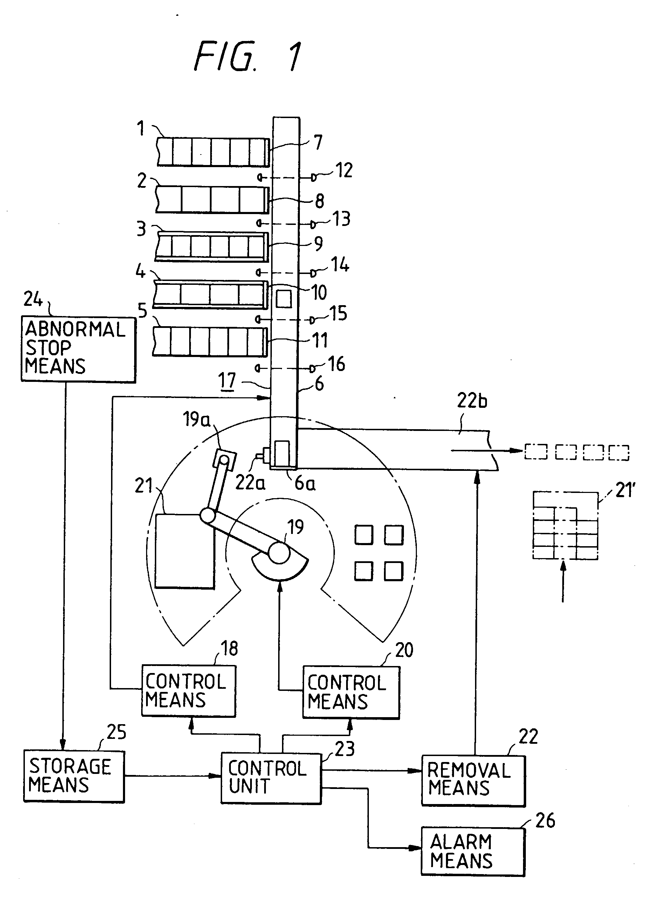

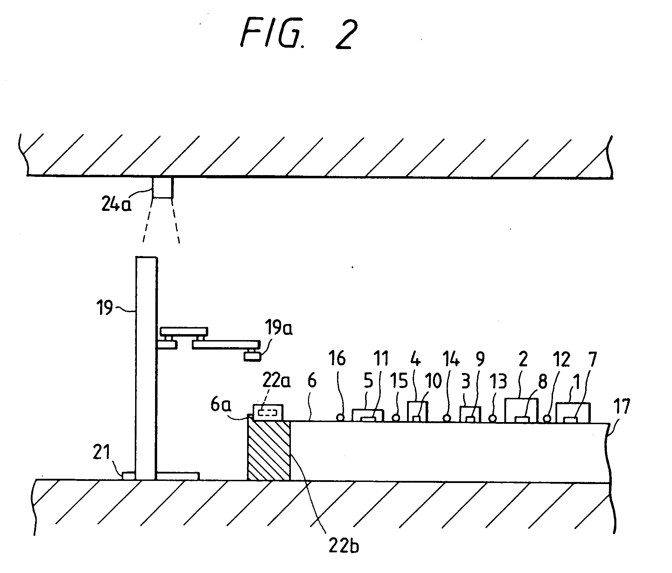

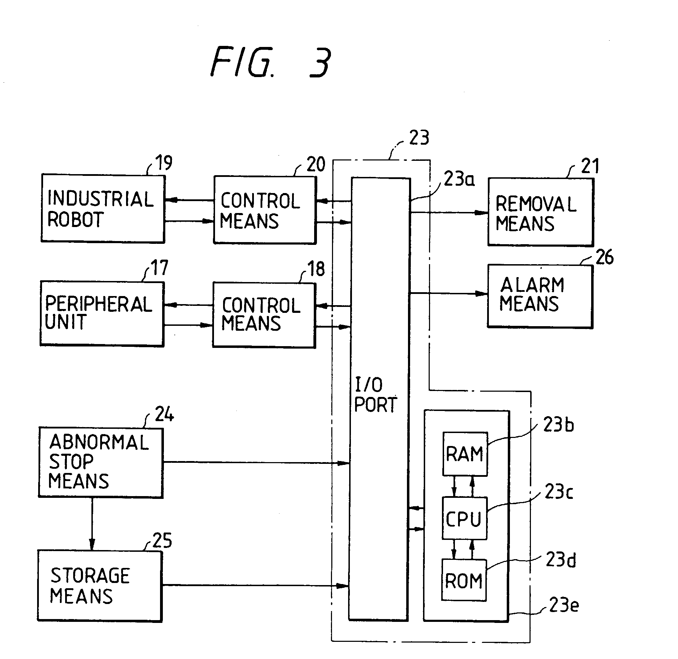

Figs. 1 to 4 are schematics showing an embodiment of the present invention. Reference numerals 1 to 5 designate receiving units, each of which is a conveyer for carrying particular workpieces different from others, respectively. The reference numeral 1 is a first receiving unit; 2 is a second receiving unit; 3 is a third receiving unit; 4 is a fourth receiving unit; and 5 is a fifth receiving unit, respectively. Reference numeral 6 is a supply conveyer disposed perpendicular to each end of the first receiving unit 1 to the fifth receiving unit 5, the supply conveyer 6 having a stopper 6a at one end.

Reference numerals 7 to 11 are blocking mechanisms disposed at one end of each of the first receiving unit 1 to the fifth receiving unit 5, respectively. Reference numerals 12 to 16 are counting units which are provided corresponding to the first receiving unit 1 to the fifth receiving unit 5, respectively, the optical path of each counting unit being traversed by the supply conveyer 6. Reference numeral 17 is a peripheral unit which is a supply unit comprising the supply conveyer 6, the blocking mechanisms 7 to 11, the counting units 12 to 16, and a control means 18. Reference numeral 19 is an industrial robot disposed at the end of the supply conveyer 6, the industrial robot 19 having a hand 19a.

Reference numeral 20 is a control means for the industrial robot 19. Reference numeral 21 is a pallet disposed at a particular position close to the industrial robot 19. Reference numeral 21, is a pallet on which workpieces are being loaded, the pallet being removed. Reference numeral 22 is a removal means including a removal program executed when an abnormal stop takes place, the removal means being provided with a removal extruding unit 22a and a removal conveyer 22b, which are disposed at the end of the supply conveyer 6. Reference numeral 23 is a control unit including a program for supplying workpieces and for loading them on a pallet, the control unit 23 being a computer comprising an I/O port 23a, a RAM 23b, a CPU 23c, and a ROM 23d. Reference numeral 24 is an abnormal stop means for detecting abnormalities of the peripheral unit 17 and the industrial robot 19 and for executing abnormal stops for them. Reference numeral 24a is a vision sensor of the abnormal stop means 24, the vision sensor 24a downwardly monitoring the pallet 21 on which workpieces are being loaded. Reference numeral 25 is a storage means for storing a program step in which an abnormal stop takes place. Reference numeral 26 is an alarm means for informing the operator of the occurrence of the abnormal stop.

In the aforementioned industrial robot apparatus, the peripheral unit 17 and the industrial robot 19 are operated through the control unit 23 according to a load command. Workpieces whose type and quantity are commanded are supplied by the peripheral unit 17 and loaded on the pallet 21 by the industrial robot 19 in the programmed conditions. The pallet 21 where the workpieces have been loaded is sent to a shipment place or the like.

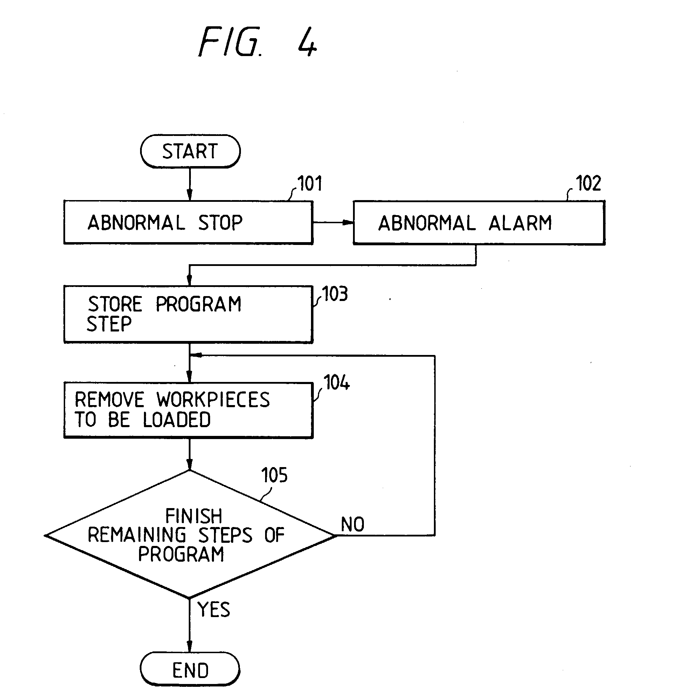

Referring to a flow chart of Fig. 4, a process in the cases that the loading operation is stopped due to a power failure or that a workpiece drops from the hand 19a will be described in the following.

When an abnormality takes place, the abnormal stop means 24 operates and thereby the peripheral unit 17 and the industrial robot 19 are abnormally stopped in the step 101. After that, the alarm means 26 is activated and an abnormal alarm is issued in the step 102. Subsequently, the storage means 25 stores the program step in which the abnormal stop takes place in the step 103. Then, the removal means 22 operates in the step 104. In the step 104, the remaining workpieces to be loaded in the steps following the stored step are removed by the operations of the peripheral unit 17, the removal extruding unit 22a and the removal conveyer 22b according to a command from the removal program. After that, in the step 105 the remaining workpiece removal operation in the step 104 is repeated until the remaining steps of the program which are executed after the abnormal stop takes place are completed. The removed workpieces and the pallet for which the loading operation has not yet been completed are transferred after the former have been manually loaded on the latter. Alternatively, the removed workpieces are sent to the corresponding receiving units 1 to 5, respectively. Thus, after the apparatus is restored from the abnormality and restarted, the required workpieces are completely loaded on the pallet, thereby providing an industrial robot apparatus with high reliability and high efficiency.

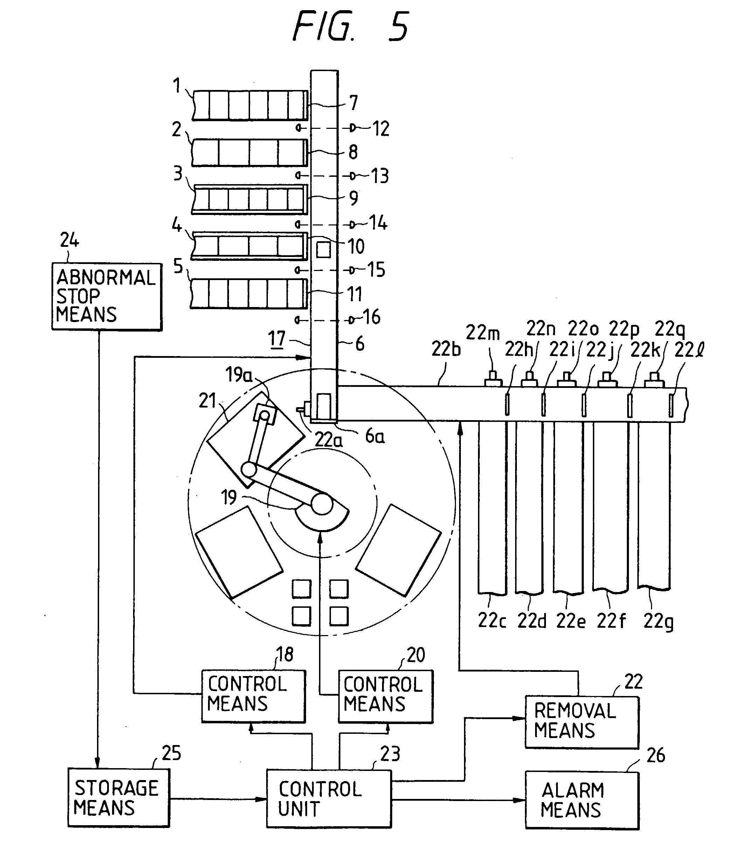

Fig. 5 is a schematic showing another embodiment of the present invention. In the figure, the same reference numerals as Figs. 1 to 4 represent same portions, respectively. Reference numerals 22c to 22q are units structuring part of the removal means 22. The reference numeral 22c is a first section conveyer whose end is in contact with the removal conveyer 22b and which accords with the first receiving unit 1. The numeral 22d is a second section conveyer which is disposed like the first section conveyer 22c and which accords with the second receiving unit 2. The numeral 22e is a third section conveyer which is disposed like the first section conveyer 22c and which accords with the third receiving unit 3. The numeral 22f is a fourth section conveyer which is disposed like the first section conveyer 22c and which accords with the fourth receiving unit 4. The numeral 22g is a fifth section conveyer which is disposed like the first section conveyer 22c and which accords with the fifth receiving unit 5.

The numeral 22h is a first stopper which is disposed on the removal conveyer 22b and which accords with the first section conveyer 22c. The numeral 22i is a second stopper which is disposed on the removal conveyer 22b and which accords with the second section conveyer 22d. The numeral 22j is a third stopper which is disposed on the removal conveyer 22b and which accords with the third section conveyer 22e. The numeral 22k is a fourth stopper which is disposed on the removal conveyer 22b and which accords with the fourth section conveyer 22f. The numeral 221 is a fifth stopper which is disposed on the removal conveyer 22b and which accords with the fifth section conveyer 22g. The numeral 22m is a first extruding unit which is disposed on the removal conveyer 22b and which accords with the first section conveyer 22c. The numeral 22n is a second extruding unit which is disposed on the removal conveyer 22b and which accords with the second section conveyer 22d. The numeral 220 is a third extruding unit which is disposed on the removal conveyer 22b and which accords with the third section conveyer 22e. The numeral 22p is a fourth extruding unit which is disposed on the removal conveyer 22b and which accords with the fourth section conveyer 22f. The numeral 22q is a fifth extruding unit which is disposed on the removal conveyer 22b and which accords with the fifth section conveyer 22g.

In other words, in the embodiment shown in Fig. 5, the control unit 23, the abnormal stop means 24, the storage means 25, the removal means 22, and so forth are provided. Thus, it is obvious that the same operation as the first embodiment shown in Figs. 1 to 4 can be accomplished in the second embodiment shown in Fig. 5.

Moreover, in the embodiment shown in Fig. 5, by the operations of the first stoppers 22h to the fifth stopper 221 and the first extruding unit 22m to the fifth extruding unit 22q, the workpieces which are removed when the abnormal stop takes place are sent to the first section conveyer 22c to the fifth section conveyer 22g. After that, the the workpieces which are sent to the first section conveyer 22m to the fifth section conveyer 22q are returned to the first receiving unit 1 to the fifth receiving unit 5. Consequently, the labor required when an abnormal stop takes place can be saved.

## Claims

1. An industrial robot apparatus for loading workpieces on a pallet (21, 21'), comprising:
a) control means (20, 23) for controlling an industrial robot (19) and a peripheral unit (17; 7-16) thereof by using a program (23) so as to load workpieces on the pallet (21, 21') from respective receiving units (1-5) associated to said peripheral unit (17; 7-16);
b) abnormal stop means (24; 101) for detecting an abnormality which occurs in at least either of said industrial robot (19) and said peripheral unit (17; 7-16) and for stopping (101) both of said industrial robot (19) and said peripheral unit (17; 7-16);
**characterized in that**
c) storage means (25; 103) for storing (103) a step of said program which is being executed when said abnormal stop (101) takes place; and
d) removal means (22; 22a, 22b; 104) for
- removing (104) remaining workpieces which have not been loaded on said pallet (21, 21') in steps of the program following said step stored in said storage means (25; 103);
- repeating said remaining removal operation until the remaining steps of the program which are executed after the abnormal stop takes place are completed; and
- sending the removed workpieces to said corresponding receiving units (1-5), respectively.

2. An apparatus as claimed in claim 1, wherein said abnormal stop means (24; 101) includes a vision sensor (24a) for monitoring said pallet (21, 21') on which the workpieces are loading.

3. An apparatus as claimed in claim 1, wherein said removal means comprises a removal extruding unit (22a) and a removal conveyer (22b).

4. An apparatus as claimed in claim 1, wherein said peripheral unit (17; 7-16) comprises a supply conveyer (6) for supplying said workpieces to said robot (19), blocking mechanisms (7-11) for stopping said workpieces on said supply conveyer (6) according to a command of said control means (20, 23), counting units (12-16) for counting said workpieces to be supplied.

5. An apparatus according to claim 1, **characterized in that** said removal means (22, 22a, 22b) comprises a unit structuring part including a number of section conveyers (22c-22g) being in contact with a removal conveyer (22b) and respectively according to said receiving units (1-5) and that when the abnormal stop takes place, workpieces, which are removed, are sent to said section conveyers (22c-22g) and then returned to said receiving units (1-5) by said removal means (22, 22a, 22b).

6. **An apparatus according to claim 4, characterized in that** each section conveyor (22a-22g) is accorded by a respective stopper (22h-22l) and a respective extruding unit (22m-22q) disposed on said removal conveyer (22b).

## Patentansprüche

1. Industrierobotervorrichtung zum Laden von Werkstücken auf eine Palette (21, 21'), umfassend:
a) eine Steuereinrichtung (20, 23) zum Steuern eines Industrieroboters (19) und einer Peripherieeinheit (17; 7-16) davon durch Verwendung eines Programms (23), um so Werkstücke auf die Palette (21, 21') von jeweiligen Aufnahmeeinheiten (1-5), die der Peripherieeinheit (17; 7-16) zugeordnet sind, zu laden;
b) eine Einrichtung (24; 101) für einen anormalen Halt zum Erfassen einer Anomalität, die in dem Industrieroboter (19) und/oder der Peripherieeinheit (17; 7-16) auftritt, und zum Anhalten (101) sowohl des Industrieroboters (19) als auch der Peripherieeinheit (17; 7-16);
**gekennzeichnet durch:**
c) eine Speichereinrichtung (25; 103) zum Speichern (103) eines Schritts des Programms, der gerade ausgeführt wird, wenn der anormale Halt (101) stattfindet; und
d) eine Entfernungseinrichtung (22; 22a; 22b; 104) zum
- Entfernen (104) von übrigen Werkstücken, die in Schritten des Programms, die dem in der Speichereinrichtung (25; 103) gespeicherten Schritt folgen, nicht auf die Palette (21, 21') geladen worden sind;
- Wiederholen der verbleibenden Entfernungsoperation, bis die übrigen Schritte des Programms, die ausgeführt werden, nachdem der anormale Halt stattfindet, beendet sind; und
- Senden der entfernten Werkstücke jeweils an die entsprechenden Aufnahmeeinheiten (1-5).

2. Vorrichtung nach Anspruch 1, dadurch gekennzeichnet, daß die Einrichtung (24; 101) für einen anormalen Halt einen Sichtsensor (24a) zum Überwachen der Palette (21, 21'), auf die die Werkstücke geladen werden, umfaßt.

3. Vorrichtung nach Anspruch 1, dadurch gekennzeichnet, daß die Entfernungseinrichtung eine Entfernungs-Ausstoßeinheit (22a) und eine Entfernungs-Zuführungseinrichtung (22b) umfaßt.

4. Vorrichtung nach Anspruch 1, dadurch gekennzeichnet, daß die Peripherieeinheit (17; 7-16) umfaßt: eine Versorgungs-Zuführungseinrichtung (6) zum Zuführen der Werkstücke an den Roboter (19), Blockiereinrichtungen (7-11) zum Stoppen der Werkstücke auf der Versorgungs-Zuführungseinrichtung (6) gemäß einem Befehl der Steuereinrichtung (20, 23) und Zähleinheiten (12-16) zum Zählen der zuzuführenden Werkstücke.

5. Vorrichtung nach Anspruch 1, dadurch gekennzeichnet, daß die Entfernungseinrichtung (22, 22a, 22b) einen Einheitsstrukturierungsteil umfaßt, der eine Anzahl von Abschnitts-Zuführungseinrichtungen (22c-22g) enthält, die in Kontakt mit einer Entfernungs-Zuführungseinrichtung (22b) stehen und jeweils gemäß der Aufnahmeeinheiten (1-5) vorgesehen sind, und daß, wenn der anormale Halt stattfindet, Werkstücke, die entfernt werden, an die Abschnitts-Zuführungseinrichtungen (22c-22g) gesendet werden und dann durch die Entfernungseinrichtung (22, 22a, 22b) an die Aufnahmeeinheiten (1-5) zurückgeführt werden.

6. Vorrichtung nach Anspruch 4, dadurch gekennzeichnet, daß jeder Abschnitts-Zuführungseinrichtung (22a-22g) ein jeweiliger Anschlag (22h-22l) und eine jeweilige Ausstoßeinheit (22m-22q) angeordnet auf der Entfernungs-Zuführungseinrichtung (22b) zugeordnet ist.

## Revendications

1. Appareil-robot industriel pour charger des pièces sur une palette (21, 21'), comprenant:
a) des moyens de commande (20, 23), pour commander un robot industriel (19) et une unité périphérique (17; 7-16) de celui-ci en recourant à un programme (23), en vue de charger sur la palette (21, 21') des pièces provenant d'unités de réception respectives (1-5) associées à ladite unité périphérique (17; 7-16);
b) un moyen d'arrêt en cas d'anomalie (24; 101), pour détecter une anomalie qui se produit au moins, soit dans ledit robot industriel (19), soit dans ladite unité périphérique (17; 7-16), et pour arrêter (101) à la fois ledit robot industriel (19) et ladite unité périphérique (17; 7-16);
caractérisé par
c) un moyen à mémoire (25; 103), pour conserver (103) une étape dudit programme qui est en cours d'exécution lorsque ledit arrêt (101) ) dû à une anomalie se produit; et
d) un moyen d'enlèvement (22; 22a, 22b; 104), pour
- enlever (104) des pièces restantes qui n'ont pas été chargées sur ladite palette (21, 21') lors d'étapes du programme qui suivent ladite étape conservée dans ledit moyen à mémoire (25; 103);
- répéter ladite opération d'enlèvement des pièces restantes jusqu'à ce que soient complétées les étapes restantes du programme, qui sont exécutées après que l'arrêt en cas d'anomalie se soit produit; et
- envoyer les pièces enlevées auxdites unités (1-5) de réception respectives.

2. Appareil selon la revendication 1, dans lequel ledit moyen d'arrêt en cas d'anomalie (24; 101) comprend un détecteur visuel (24a) pour surveiller ladite palette (21, 21') sur laquelle les pièces sont chargées.

3. Appareil selon la revendication 1, dans lequel ledit moyen d'enlèvement comprend une unité d'enlèvement par poussée (22a) et un convoyeur d'enlèvement (22b).

4. Appareil selon la revendication 1, dans lequel ladite unité périphérique (17; 7-16) comprend un convoyeur d'alimentation (6) pour fournir lesdites pièces audit robot (19), des mécanismes de blocage (7-11) pour arrêter lesdites pièces sur ledit convoyeur d'alimentation (6), en fonction d'une commande provenant dudit moyen de commande (20, 23), et des unités de comptage (12-16) pour compter lesdites pièces à fournir.

5. Appareil selon la revendication 1, caractérisé en ce que ledit moyen d'enlèvement (22, 22a, 22b) comprend une partie de structuration d'unités, comprenant plusieurs convoyeurs partiels (22c-22g) en contact avec un convoyeur d'enlèvement (22b) et correspondant respectivement auxdites unités réceptrices (1-5) et en ce que, lorsque l'arrêt dû à une anomalie se produit, des pièces qui sont enlevées sont envoyées auxdits convoyeurs partiels (22c-22g) et ensuite renvoyées auxdites unités réceptrices (1-5) par ledit moyen d'enlèvement (22, 22a, 22b).

6. Appareil selon la revendication 4, caractérisé en ce que chaque convoyeur partiel (22a-22g) est associé à un dispositif d'arrêt (22h-22ℓ) respectif et à une unité de poussée (22m-22q) respective, disposés sur ledit convoyeur d'enlèvement (22b).
